# EUROPEAN PATENT SPECIFICATION

(11) **EP 4 143 448 B1**
(45) Date of publication and mention of the grant of the patent: **28.02.2024**
(21) Application number: 20737005.7
(22) Date of filing: 06.07.2020
(51) Int. Cl.: F16C 11/04, F16C 11/06, F16C 11/12, F16F 1/02

(54) **JOINT FOR A DEVICE MOVEABLE IN VACUUM, MECHANISM FOR MOVING A DEVICE IN VACUUM AND DEVICE**
GELENK FÜR EINE IM VAKUUM BEWEGBARE VORRICHTUNG, MECHANISMUS ZUM BEWEGEN EINER VORRICHTUNG IM VAKUUM UND VORRICHTUNG
JOINT POUR UN DISPOSITIF MOBILE DANS LE VIDE, MÉCANISME POUR DÉPLACER UN DISPOSITIF DANS LE VIDE ET DISPOSITIF

(43) Date of publication of application: 08.03.2023
(73) Proprietor: Max-Planck-Gesellschaft zur Förderung der Wissenschaften e.V., 80539 München (DE)
(72) Inventor: BRAUN, Wolfang, 74321 Bietigheim-Bissingen (DE)
(74) Representative: Manitz Finsterwald Patent- und Rechtsanwaltspartnerschaft mbB
(86) International application number: PCT/EP2020/068993
(87) International publication number: WO 2022/008029

(56) References cited:
- EP-A1- 3 153 404
- WO-A2-2010/078520
- FR-A- 725 995
- FR-A- 1 030 268
- JP-A- S62 125 408
- US-A1- 2015 352 587

## Description

The present invention relates to a joint for a device moveable in vacuum, the joint comprising a supporting part, a mobile part and a guiding und connecting part, wherein the mobile part and the supporting part each have a convex shape, with the convex shapes of the mobile part and of the supporting part facing one another and with the guiding and connecting part being clamped between the convex shape of the supporting part and of the mobile part, wherein the guiding and connecting part has a greater bending elasticity than either of the supporting part and the mobile part. The invention further relates to a mechanism for moving a device in vacuum, the mechanism comprising a plurality of joints and to a device comprising a plurality of joints and/or a mechanism, with the device being configured to be moved in a vacuum.

General mechanisms for providing a movement of two members are generally known, see for instance EP 3 153 404 A1, FR 1 030 268 A, and FR 725 995 A.

Vacuum, and in particular ultrahigh vacuum (UHV) is used to provide extremely clean environments for many technologically important processes such as purification or film deposition. Machines that provide ultrahigh vacuum often need to include means to move parts within, e.g. to transfer a substrate between different deposition chambers. To not detrimentally affect the low background pressure of such an environment, moving parts should not emit gases or particles. This prohibits the use of lubricants, and requires the absence of gliding friction to prevent abrasion. A mechanism for linear and quasilinear motion in UHV is disclosed in the prior art, which is based on spheres, concave surfaces and (usually magnetic) forces that stabilize the motion.

Precise movements in ultraclean environments require motions without mechanical play. At the same time, these movements should require the least possible force to operate. In particular, no work should be dissipated into friction and in particular gliding friction. Gliding friction leads to wear of the components, which can be dramatic in vacuum environments where no lubrication is possible. Gliding friction also leads to the generation of particles that contaminate the environment if, e.g., they end up on wafer surfaces or in evaporation materials. Gliding friction also leads to heating of the components gliding on each other, which results in outgassing and thereby further contamination of the vacuum environment.

At the same time, relatively large forces may be required to manipulate objects in UHV; as many of the best UHV compatible construction materials such as Ta, Mo or Al₂0₃ have a high density. Accelerating, decelerating and lifting such components requires substantial forces. Highly precise joints in UHV; e.g. in piezo actuators or diffractometers, are often made as flexible bridges machined out of the same block together with both parts moving relative to each other.

In such mechanisms, however, the bending bridge not only serves to allow for the movement, but it also serves to guide and position the parts relative to each other. There is therefore a conflict between making the bridge as thin as possible to allow for easy movement without strong elastic restoring forces, and the requirement of a thick bridge that is able to support the required loads, in particular for the case of compressive loads. In addition, such mechanisms, being machined out of a single piece of material, require a compromise between ideal elastic properties in the bridge and other material properties such as easy machinability in the other regions.

It is an object of the present invention to provide a joint, in particular for movement in UHV, which is as gliding-friction-free, play-free, as possible and is capable of strong-force movement while being capable of precisely supporting heavy loads.

This object is satisfied by a joint having the features of claim 1.

Such a joint for a device moveable in vacuum may comprise a supporting part, a mobile part and a guiding und connecting part, wherein the mobile part and the supporting part each have at least a region of convex shape, with the regions of convex shape of the mobile part and of the supporting part facing one another and with the guiding and connecting part being clamped between the regions of convex shape, wherein the guiding and connecting part has a greater bending elasticity than either of the supporting part and the mobile part and the guiding and connecting part has a reduced thickness in comparison to the supporting part and the mobile part, and wherein the mobile part can move relative to the supporting part.

In this connection it should be noted that the supporting part and the mobile part comprise a region of convex shape, i.e. a respective part of the supporting part and of the mobile part has a convex shape. Alternatively the supporting part and/or the mobile part may be completely of convex shape, i.e. have an arc-shaped outer shape, a cylindrical outer shape, a round outer shape, an oval outer shape, a spherical outer shape etc. and combinations of the foregoing.

In this connection it should be noted that the guiding and connecting part enables the mobile part to move relative to the supporting part. Since the guiding and connecting part is clamped directly between the mobile part and the supporting part, the mobile part can rotate relative to the supporting part, while the mobile part and the supporting part are in constant contact with the guiding and connecting part such that the joint is play-free. Thus, the guiding and connecting part connects the mobile part to the supporting part and as it has a greater bending flexibility in comparison to the supporting part and the mobile part it can also guide the movement of the mobile part relative to the supporting part.

It should further be noted that the supporting part may generally hold the joint in position while the mobile part moves, i.e. is mobile, relative to the supporting part, while the supporting part supports the movement of the mobile part via the guiding and connecting part.

A joint is thus described which allows the limited relative rotation of bodies without gliding friction and without mechanical play. It works without lubricants, and is therefore particularly suitable for motions in vacuum where the use of lubricants as well as the generation of particles is unfavorable. The motion is allowed and guided by an elastically deformed sheet, i.e. the guiding and connecting part, that is rigidly attached at different points to the bodies rotating relative to each other. The sheet can be in direct contact with both bodies at all times, defining a unique path of motion, i.e. a part which guides the motion of the two bodies. The joint does not have fixed rotation axes.

The present invention is based on thin, elastic sheets of metals or similarly stable materials, preferably made of spring metal. Belts are known to transmit forces between rotating bodies, but they do not define the rotation as the bodies have rotation axes that remain at the same position within the bodies. Bendable elastic sheets are used as low friction joints, e.g. to suspend pendulums in clocks. In such joints, however, the motion of the moving part is not unique, as the bending of the sheet is not guided, and its elasticity may lead to oscillations in the plane of rotation.

The proposed solution thus separates the functions gliding-friction-free, play-free, strong-force movement from the function of precise support of heavy loads. It makes use of the properties of thin sheets, in particular sheets of metal. Such sheets can support strong tensile forces in the plane of the sheet. At the same time, they also support strong compressive forces perpendicular to the plane of the sheet. They are not very strong against compressive forces in the plane of the sheet, which may lead to crumpling of the material.

The region of convex shape of at least one of the mobile part and the supporting part may have an arcuate shape. In this way a rotational motion of the mobile part relative to the supporting part can be pre-defined. Preferably the regions of convex shape have the shape of at least a part cylinder such that the motion of the mobile part relative to the supporting part can also be supported in a plane perpendicular to the direction of motion of the mobile part relative to the supporting part.

The respective region of convex shape of the mobile part and of the supporting part is formed by bending a respective first part of the region of convex shape relative to a second part of the region of convex shape, with the bend being selected in the range of 10 to 80°. In this way a joint can be formed that has a range of motion between 10 and 80°, so that if two joints are used in a mechanism a range of rotation can be selected in the range of 20 to 160°. The mobile part can rotate relative to the supporting part, with a range of rotation being selected in the range of 20 to 160°.

The region of convex shape of the mobile part and of the supporting part may be formed such that the mobile part and the supporting part each have a part cylindrical surface having an arcuate shape and forming a part cylindrical axis. The surfaces thereby define the movement range of the mobile part relative to the supporting part, by forming these such that they have a part cylindrical axis the rotational motion of the mobile part relative to the supporting part can be improved and supported also in a direction perpendicular to the plane of motion.

Preferably a plane containing the part cylindrical axes of the surfaces of the mobile part and the supporting part contain contact lines of the mobile part and the supporting part with the guiding and connecting part. Thus, as the mobile part moves relative to the supporting part the position of the axis of rotation shifts relative to its previous position in a controlled manner, i.e. the plane comprising the contact lines rotates while the mobile part rotates relative to the supporting part.

The guiding and connecting part may have a bending elasticity which is at least twice the bending elasticity of the mobile part and/or of the supporting part. This means that the guiding and connecting part will bend twice as much, and/or twice as fast as one of the mobile part and/or of the supporting part while it is subjected to the same load. Thereby the joint can be formed as play-free and as gliding friction free as possible.

The guiding and connecting part, the mobile part and the supporting part may be made from the same material. In this way the complete joint can be made from metal and the increase in bending elasticity of the guiding and connecting part can be achieved by selecting the relative thicknesses of the parts of the joint.

The guiding and connecting part, the mobile part and the supporting part are made in one piece. In this way the parts can be formed from one piece of material and the interface surfaces between the respective part have a shape tailored to one another whose quality is defined by the cutting process used to cut the parts and to form the interface surfaces.

The guiding and connecting part, the mobile part and the supporting part are separate components. In this way the components can be formed separate from one another and be tailored to their specific function, e.g. a comparatively hard material can be used for the supporting part and optionally also for the mobile part, whereas a softer, more flexible material can be employed for the guiding and connecting part to define the increased bending elasticity in the guiding and connecting part.

The mobile part may comprise a material selected from the group of members consisting of metal, such as stainless steel, steel, aluminium, aluminium alloys, non-ferrous alloys, high temperature alloys, carbon steels, high carbon steels, steel alloys, aluminium bronze, nickel, nickel alloys, brass, oxygen-free copper, titanium, niobium, molybdenum, tantalum, plastic, such as, polyether ether ketone, polycarbonate, polyoxymethylene, polytetrafluoroethylene, vespel polyimide, glass, wood, ceramic material, silicon and combinations of the foregoing. The supporting part may comprise a material selected from the group of members consisting of metal, such as stainless steel, steel, aluminium, aluminium alloys, non-ferrous alloys, high temperature alloys, carbon steels, high carbon steels, steel alloys, aluminium bronze, nickel, nickel alloys, brass, oxygen-free copper, titanium, niobium, molybdenum, tantalum, plastic, such as, polyether ether ketone, polycarbonate, polyoxymethylene, polytetrafluoroethylene, vespel polyimide, glass, wood, ceramic material, silicon and combinations of the foregoing. The guiding and connecting part may comprise a material selected from the group of members consisting of stainless steel, steel, aluminium, aluminium alloys, non-ferrous alloys, high temperature alloys, carbon steels, high carbon steels, steel alloys, aluminium bronze, nickel, nickel alloys, brass, oxygen-free copper, titanium, niobium, molybdenum, tantalum, polyether ether ketone, polycarbonate, polyoxymethylene, polytetrafluoroethylene, vespel polyimide, silicon and combinations of the foregoing. In this way joints can be formed that can be as gliding-friction-free, play-free, as possible and can be capable of strong-force movement while being capable of precisely supporting heavy loads and that can be used for micro-machines, such as miniature medical robots, as joints used for devices in UHV applications and also as joints used in construction machinery such as cranes.

The guiding and connecting part may have a thickness selected in the range of 0.02 µm to 5 cm, in particular 1 to 100 µm. A thickness of the mobile part may be selected in the range of 0.04 µm to 100 cm, in particular in the range of 0.5 to 2 mm. A thickness of the supporting part may be selected in the range of 0.04 µm to 100 cm, in the range of 0.5 to 2 mm. In this way joints can be formed that can be used for micro-machines, such as miniature medical robots, as joints used for devices in UHV applications and also as joints used in construction machinery such as cranes.

The guiding and connecting part may be fastened to at least one of the mobile part and the supporting part. In this way the guiding function of the guiding and connecting part can be improved leading to an even more play-free and gliding friction-free joint as possible.

One or more ends of the guiding and connecting part may be fastened to at least one of the mobile part and the supporting part. Connecting the ends of the guiding and connecting part to the mobile part and/or the supporting part ensures a relative motion of the mobile part relative to the supporting part between the ends of the guiding and connecting part. In this connection it should be noted that the guiding and connecting part may be fastened to at least one of the mobile part and the supporting part by at least one of spot welding, welding, soldering, brazing, screwing, bonding and riveting. Such fastening techniques can be easily employed on forming the joint.

According to a further aspect the present invention relates to a mechanism for moving a device in vacuum, the mechanism comprising a plurality of joints.

A mechanism is thus proposed that separates the functions gliding-friction-free, play-free, strong-force movement from the function precise support of heavy loads. It makes use of the properties of thin sheets, in particular sheets of metal. Such sheets can support strong tensile forces in the plane of the sheet. At the same time, they also support strong compressive forces perpendicular to the plane of the sheet. They are not very strong against compressive forces in the plane of the sheet, which may lead to crumpling of the material.

The mechanism may comprise four joints to form a rectangular, square shaped or parallelogram based mechanism. In order to stabilize the motion in the third dimension, the mechanism may extend uniformly in the width dimension, preferentially by about the same amount as the vertical sizes of the mechanism. In this connection the mechanism may be a parallelogram mechanism with one side of the parallelogram mechanism being held fixed to a further component and the plurality of joints being arranged at the edges of the parallelogram mechanism. Such mechanisms have been found to be suitable mechanism for devices operable in UHV.

The parallelogram mechanism may be configured to be moved to and fro in one direction relative to the one side of the parallelogram mechanism held fixed to the further component. In this way a gliding friction free and play-free movement can be pre-defined in one or more directions of movement.

According to a further aspect the present invention relates to a device comprising a plurality of joints and/or a mechanism, with the device being configured to be moved in a vacuum. In this way a device can be formed which is gliding friction free and play-free that can support heavy loads also in vacuum conditions.

The device may further comprise an actuation mechanism, with the actuation mechanism being attached at the side of the mechanism held fixed to a further component. The actuation mechanism can be used to move a part of the device relative to another part in order to move the device in one or more directions.

The actuation mechanism may comprise a push rod. Push rods can direct the motion in one direction in a guided and precise manner.

The device may further comprise a support for linking the device to an applicator attached to a further side of the mechanism of the device remote from the side held fixed to a further component. In this way the device can be configured to move loads to and fro. In order to transport the loads the support may comprise at least one of a bracket, a fork, a plate, a holder, a table and a combination of the foregoing.

The support may be configured to make contact to the applicator in a direction perpendicular to the direction of movement. In this way no gliding friction or the like arises when the device makes contact to the load which it can support. In this connection it should be noted that the applicator may comprise one of a source holder, an aperture, a source, a beam dump, a deflector and combinations of the foregoing. Such applicators are generally used in UHV applications, such as coating applications.

The invention will now be described in further detail by way of example only with reference to the accompanying drawings. In the drawings there are shown:
- Fig. 1:: a single joint in neutral position with load directions indicated by force arrows.
- Fig. 2:: a parallelogram mechanism based on four joints according to the invention; The right side is kept fixed, as indicated by the blocks, the left side may support a load. Three different positions within the movement range are shown;
- Fig. 3:: permissible force directions for proper operation;
- Fig. 4:: different positions of the joint shown in Fig. 1 during its movement;
- Fig. 5:: a reversed single joint in neutral position with load directions indicated by force arrows;
- Fig. 6:: permissible force directions for proper operation of the reversed joint of Fig. 5;
- Fig. 7: different positions of the joint shown in Fig. 5 during its movement;
- Fig. 8:: an example of an integrally formed joint;
- Fig. 9:: different positions of the joint shown in Fig. 8 during its movement;
- Fig. 10:: an example of an integrally formed joint in reverse orientation;
- Fig. 11:: different positions of the joint shown in Fig. 10 during its movement;
- Fig. 12:: a perspective view of a device;
- Fig. 13:: a side view of the device of Fig. 12; and
- Fig. 14a to d:: example applicators.

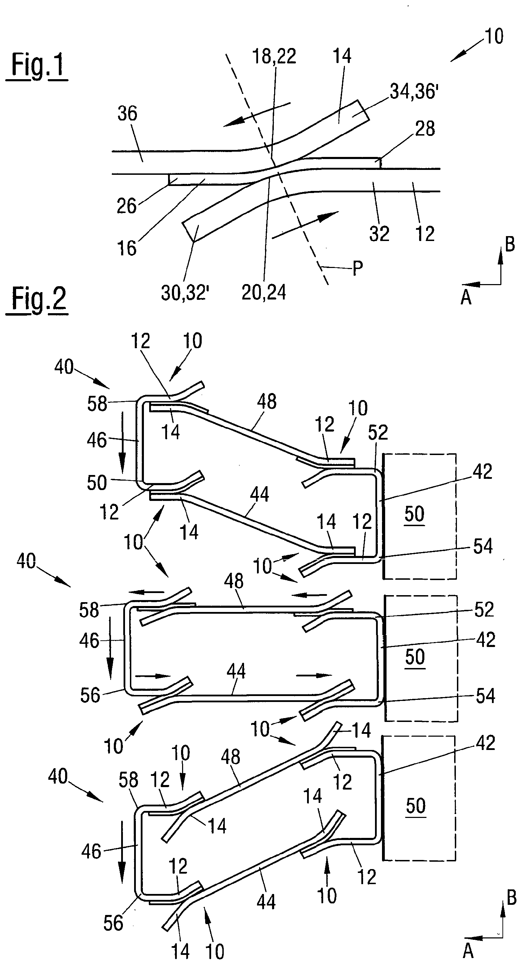

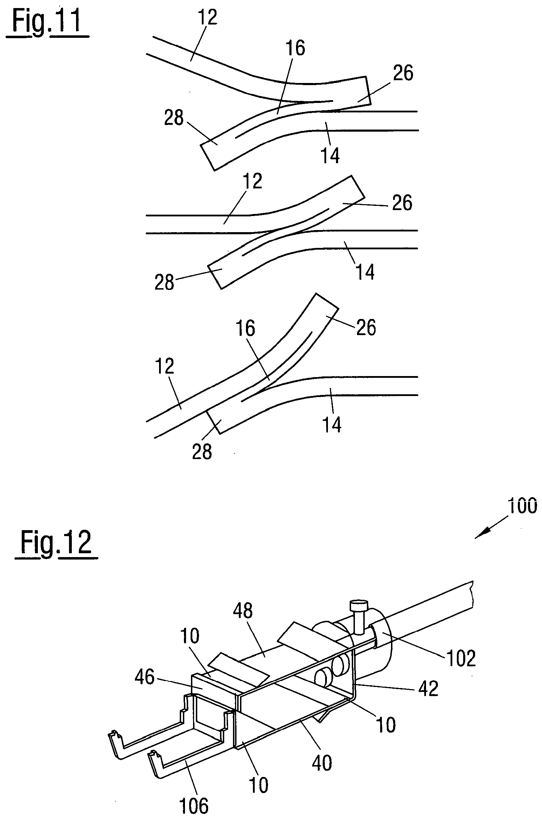

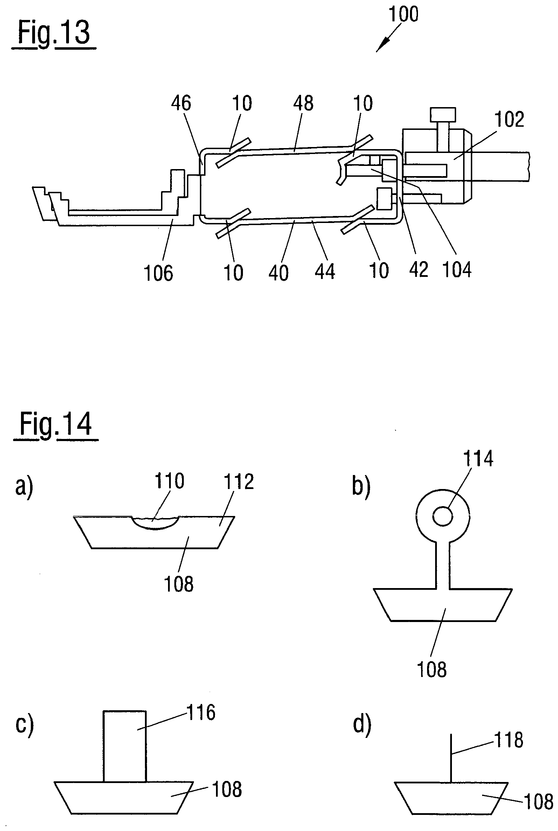

Fig. 1 shows a single joint 10 in neutral position with load directions indicated by force arrows being illustrated. The joint 10 is for a device 100 (see Figs. 12 and 13) moveable in vacuum. The joint 10 comprises a supporting part 12, a mobile part 14 and a guiding und connecting part 16. The mobile part 14 and the supporting part 12 each have one region 18, 20 of convex shape, with the region 18 of convex shape of the mobile part 14 facing the region 20 of convex shape of the supporting part 12. The guiding and connecting part 16 is clamped between the regions 18, 20 of convex shape.

The guiding and connecting part 16 has a greater bending elasticity than either of the supporting part 12 and the mobile part 14 and the guiding and connecting part 16 has a reduced thickness in comparison to the supporting part 12 and the mobile part 14, and wherein the mobile part 14 can move relative to the supporting part 12.

The respective region 18, 20 of convex shape of at least one of the mobile part 14 and the supporting part 12 is formed by a part cylindrical surface 22, 24 having an arcuate shape. The rounded surface of the part cylindrical surfaces 22, 24 permit a rotation of the mobile part 14 relative to the supporting part 12 about a part cylindrical axis. The surface normal of the part cylindrical surfaces 22, 24 provides a support in the direction of the length of the respective part cylindrical surface 22, 24, i.e. in the axial direction of the part cylinder, so that the mobile part 14 rotates relative to the supporting part 12 and is at the same time axially supported.

In this connection it should be noted that a plane P containing the part cylindrical axes of the part cylindrical surfaces 22, 24 of the mobile part 14 and the supporting part 12 contain contact lines of the mobile part 14 and of the supporting part 12 with the guiding and connecting part 16.

On forming a joint the respective region 18, 20 of convex shape of the mobile part 14 and of the supporting part 12 is formed by bending a respective first part of the region 18, 20 of convex shape relative to a second part of the region 18, 20 of convex shape, with the bend being selected in the range of 10 to 80°. In this way the mobile part 14 can rotate by between 20 and 160° relative to the supporting part 12.

Fig. 2 shows a parallelogram mechanism 40 having four joints 10. In the drawing the right side 42 of the mechanism 40 is kept fixed to a further component 50, as indicated by the blocks, the left side 46 may support a load (see e.g. a support 106 as indicated in Figs. 12 & 13).

The top drawing shows a first position of movement of the mechanism 40 in which it is deflected upwardly, the middle drawing shows the mechanism 40 in its rest state, whereas the bottom drawing shows the mechanism deflected downwardly.

The mechanism comprises four sides 42, 44, 46, 48 with the first side 42 (i.e. the right side) being connected to a further component 50 held fixed in position and third side 46 disposed opposite the first side 42 to which a further component (not shown in Fig. 2) can be connected.

The plurality of joints 10 are arranged at edges 52, 54, 56, 58 of the mechanism 40. One of the supporting parts 12 of the four joints 10 of the mechanism 40 is formed at the side 42 fixed to a further component 50. A further one of the supporting part 12 of the four joints 10 of the mechanism 40 is formed at the side 46 configured to be connected to the support 106 (see Fig. 12). Thus, in this embodiment each side connected to further components 50, 106 comprises one supporting part 12 and two mobile parts 14.

The mobile parts 14 of the respective joints 10 can hence move relative to both the further component 50 and the support 106. The parallelogram mechanism 40 is configured to be moved to and fro in one direction A relative to the one side 42 of the parallelogram mechanism 40 held fixed to the further component 50.

The individual joint 10 (Fig. 1) is therefore designed specifically for certain orientations of the forces acting on the joint as shown by the arrows in Figs. 1 and 2. It consists of three parts. The upper part is the mobile part 14, with a combined force acting to the left and downwards on it. The lower part of the joint 10 is the supporting part, and supplies the opposite force according to Newton's law. The two parts 12, 14 are connected via the guiding and connecting part 16 which is a thin sheet of elastic material (e.g. spring-hard stainless steel) in the example of Figs. 1 and 2 that is connected to the upper part at its left and, and to the lower part at its right end. This sheet is under tensile strain.

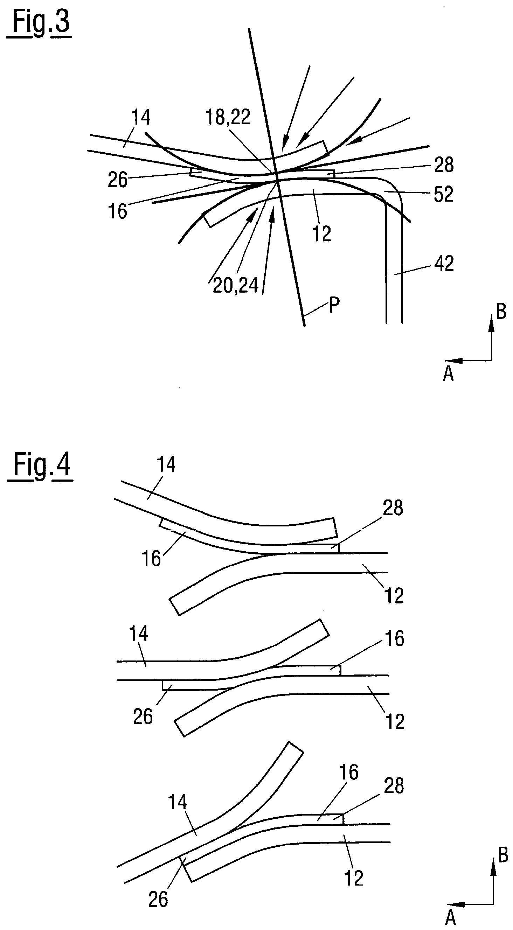

The cylindrical surfaces 22, 24 of the top and bottom parts 14, 12 facing the guiding and connecting part 16 define the range of rotation, in the present example both bends are 30°, resulting in a total range of rotation of at most 60°. The plane containing the cylinder axes of these surfaces 22, 24 also contains both contact lines of the upper and lower parts 14, 12 with the elastic sheet 16 (Fig. 3).

Approximately halfway between these contact lines is the momentary axis of rotation between the upper and lower parts 12, 14. During rotation, this rotation axis moves along the surface approximately halfway between the upper and lower surfaces of the elastic material, i.e. of the guiding and connecting part 16, and collinear with the axes of the cylindrical surfaces 22, 24. As an example for a small mechanism 40, the upper and lower parts 14, 12 may consist of stainless steel sheet metal 1 mm thick, the elastic sheet may have a thickness of 20 µm.

For a given position during the movement, the shaded rectangles 50 in Fig. 3 indicate the allowed directions of the forces. For the upper part 14, these originate in the upper right quadrant, directed at the end line of the contact surface between the upper part 14 and the elastic sheet 16.

For the lower part 12, these originate in the lower left quadrant, directed at the end line of the contact surface between the lower part 12 and the elastic sheet 16. The mechanism 40 only works as intended if the force directions remain in these quadrants at all times throughout the movements. For many cases, such as the parallelogram mechanism 40 shown in Figs. 2 and 12 to 13, however, this requirement can be met.

The joint 10 of Fig. 1 is shown in different positions along its range of movement in Fig. 4. The guiding and connecting part 16, i.e. the elastic sheet, is fastened at its ends 26, 28 to the supporting part 12 and the mobile part 14 by standard connection methods according to the state of the art such as spot welding, rivets, or screws.

Preferentially, and as shown by the positions in Fig. 4, the movement range should be designed with headroom in both directions, such that the rotation never exactly reaches or even exceeds the ends of the cylindrical bends of the top and bottom parts 14, 12.

If operated near or beyond these points, the elastic sheet 16 may be bent sharply near its fastening points, and may eventually fail. Forces pointing towards the contact point in the lower right quadrant for the upper part and in the upper left quadrant for the lower part in Fig. 3 will lead to a lifting and detachment of the joint 10. Under these conditions, the plane containing the end line of the contact surface between the elastic sheet 16 and the upper part 14 and the end line of the contact surface between the elastic sheet 16 and the lower part 12 no longer contains the axes of the cylindrical surfaces 22, 24 of the upper and lower parts 14, 12. There is no longer a firm perpendicular contact between the upper and lower parts 14, 12 through the elastic sheet 16. The parts 14, 12 hang at each other with some length of free elastic sheet 16 between them, leading to the possibility of oscillations or rupture of the elastic sheet 16 near its fastening points, i.e. near to its first and second ends due to excessive and non-elastic bending near these points.

Finally, for both of the two cases discussed above, if the direction of the forces is reversed, the elastic sheet 16 will be compressively strained in plane, leading to bulging, crumpling and failure for already rather small forces.

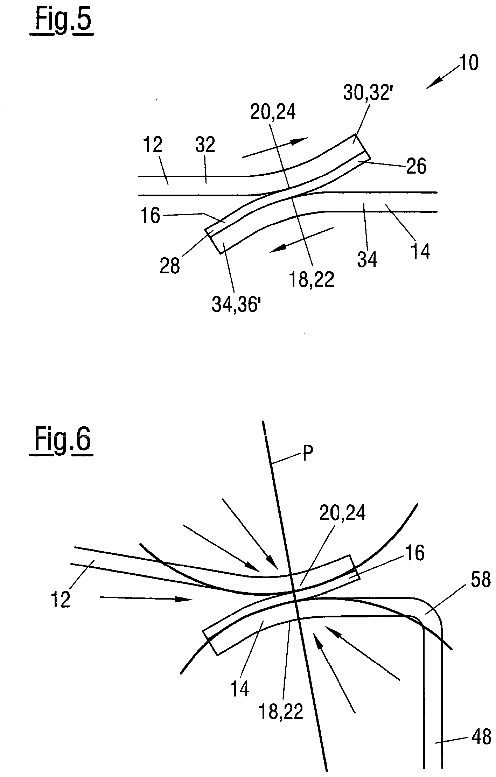

For a joint 10 that needs to support forces in these directions, the attachment of the elastic sheet may be reversed as shown in Fig. 5 and for the lower joints of the parallelogram in Fig. 2.

Fig. 5 shows a single joint 10 reversed in its arrangement in comparison to the joint 10 shown in Fig. 1. The joint 10 is in neutral position with load directions indicated by force arrows. Fig. 6 shows the permissible force directions for proper operation of the reversed joint of Fig. 5.

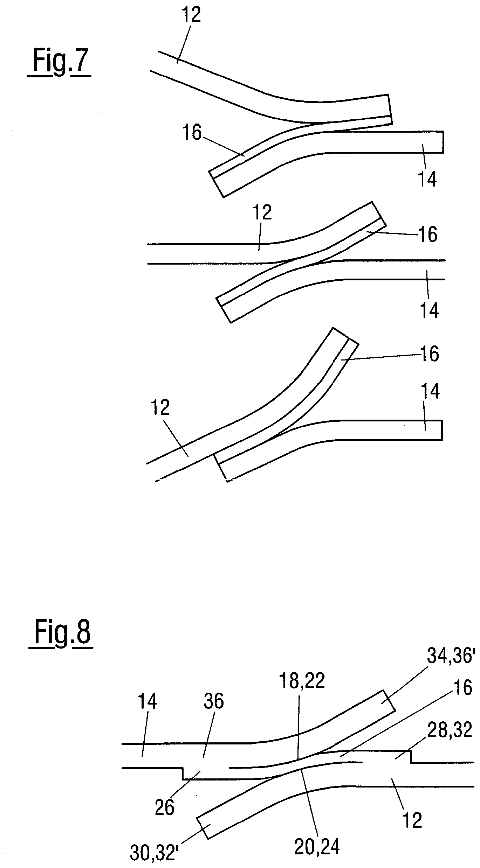

As indicated by the arrows in Figs. 5 and 6, the forces on both parts 12, 14 are opposite to the first case illustrated in connection with Fig. 1. The corresponding force quadrants are shown in Fig. 6. The same range of movements as for the joint 10 of Fig. 1 shown in Fig. 4 is displayed for the joint 10 of Fig. 5 in Fig. 7.

In a complex mechanism 40 containing several joints 10, such as shown in Fig. 2, normal or reversed joints 10 may be combined in such a way that each joint 10 is always loaded in its correct direction. In Fig. 2, if we assume that a load needs to be lifted on the free (left) end (side 46), the upper two joints 10 are under tensile strain, whereas the lower two joints 10 are under compressive strain. All four elastic sheets (guiding and connecting parts 16) are pulled upon by the acting forces, leading to the desired correct operation of the combined mechanism 40.

As further indicated in Fig. 5, the first end 26 of the guiding and connecting part 16 is connected to an end 30 of the supporting part 12 and the second end 28 of the connecting part 16 is connected to an end 34 of the mobile part 14.

The guiding and connecting part 16 is arranged between the respective regions of convex shape 18, 20, with a first border 32' of the region 20 of convex shape of the supporting part coinciding with the end 30 of the supporting part 12, and a second border 32 of the region 20 of convex shape of the supporting part 12 being arranged symmetrically about the apex of the region 20 of convex shape with respect to the first border 32' such that the region 20 of convex shape extends between the first and second borders 32', 32, with its apex lying at least substantially equidistantly between the first and second borders 32', 32.

The same is true with respect to first and second borders 36', 36 of the region 18 of convex shape of the mobile part 14, i.e. the end 34 of the mobile part coincides with the first border 36' of the region 18 of convex shape of the mobile part 14.

In contrast to this in the joint 10 of Fig. 1, the second end 28 of the guiding and connecting part 16 is connected to the second border 32 of the region of convex shape 20 and the first end 26 of the guiding and connecting part 16 is connected to the mobile part 14 at the second border of the region 18 of convex shape of the guiding and connecting part 16.

The cylindrically bent surfaces 22, 24 of the upper and lower parts 14, 12 in contact with the elastic sheet 16 do not necessarily need to have a constant radius. A constant and identical radius for both surfaces 22, 24, however, is favorable since it leads to a constant maximum value for the elastic bending of the sheet 16 in both directions symmetric to its flat state.

The elastic sheet 16 wears due to internal friction and eventually crack formation leading to the rupture of the sheet 16. The sheet 16 should therefore preferably have smooth and rounded edges to hinder the nucleation of fatigue cracks at the edges. It should also vary only gradually, or not at all, in cross-section as cracks also tend to form at the points of largest cross-sectional change.

Most importantly, however, the radius of the cylindrical surfaces 22, 24 should be as large as possible for the given spatial constraints, and in relation to the sheet thickness. A larger radius leads to smaller bending, less internal friction, and thereby extends the lifetime of the mechanism. The cylindrical surfaces 22, 24 in contact with the elastic sheet 16 should also be as smooth as possible.

In this connection it should be noted that when reference is made to an elastic sheet 16, this means that the sheet 16 is more elastic in its bending properties than the respective supporting part 12 and mobile part 14.

In particular, the cylindrical surfaces 22, 24 should have as few as possible and preferably no localized protrusions or recesses that may cause uneven operation and might indent and damage the sheet 16.

In this connection it should further be noted that the guiding and connecting part 16 preferably has a bending elasticity which is at least twice the bending elasticity of the mobile part 14 and/or of the supporting part 12. However, the elasticity of the guiding and connecting part should not be so low, that this deforms when it contacts the mobile part 14 and the supporting part 12 respectively.

In this connection it should be noted that the guiding and connecting part 16, the mobile part 14 and the supporting part 12 are made from the same material, alternatively the guiding and connecting part 16 can be made from a different material as the mobile part 14 and the supporting part 12, it is also possible that all three of the guiding and connecting part 16, the mobile part 14 and the supporting part are each made from different materials, with each material being suited to its specific function. Since the guiding and connecting part 16 is required to have a bending elasticity it is favourable if this is made from a material typically employed for springs, such as spring metal.

The load limits of the joint 10 are given by the cross-section of the used elastic sheet 16 and the mechanical strength of the used elastic sheet 16. For a given strength, a lengthening of the sheet 16 normal to the image plane of the figures is preferred over using a thicker sheet, as the wear of the sheet 16 strongly increases with thickness for a given bend radius. The width of the sheet 16 also defines the ability of the mechanism 40 to provide lateral guidance, in the out-of-plane direction normal to the plane in which the movement takes place. The wider the sheet 16, the larger the lateral forces it can support. The width of the sheet 16 finds its limits in the available space, but also in the manufacturing tolerances of the parts, as deviations from the cylindrical shape of the surfaces 22, 24 in contact with the sheet 16 may strain the sheet 16, both locally and globally. One also has to take into account possible dynamical deformations of the upper and lower parts 12, 14 under heavy loads, leading to the same problem, however depending on the load during operation.

The guiding and connecting part 16, the mobile part 14 and the supporting part 12 shown in the foregoing are made from separate components that are connected to one another.

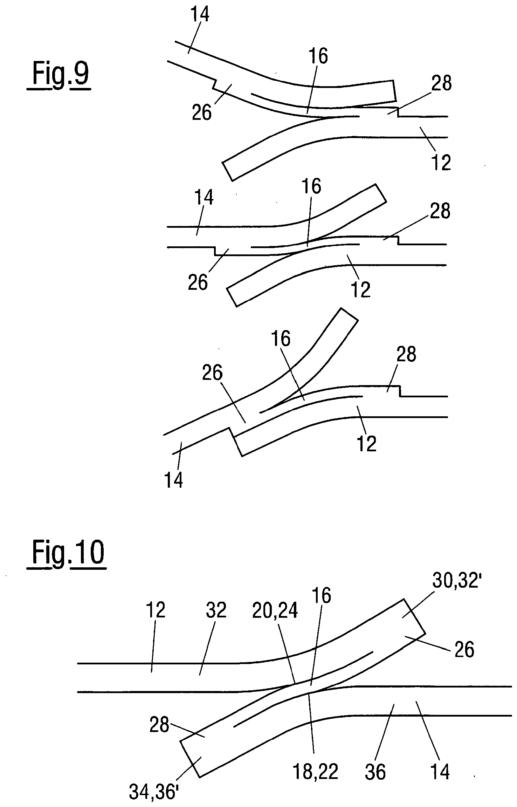

In the following an example of integrally formed joints 10 will be discussed in connection with Figs. 8 to 11, i.e. joints 10 made from one piece from the same material will be shown in these Figs. Figs. 8 and 10 show examples of integrally formed joints 10, whereas Figs. 9 and 11 show different positions of the joints 10 shown in Figs. 8 and 10 during their movement.

Figs. 8 to 11 show the normal and inverted mechanisms with the surfaces removed at which the elastic sheet 16 is attached to the top and bottom parts 12, 14. This serves to illustrate and emphasize the fact that these connections are rigid, and therefore do not allow for mechanical play. The connection in these regions should be as uniform and as firm as possible, so that the in-plane strain in the sheet 16 due to the joint load is introduced evenly and uniformly into the sheet 16.

The drawings also suggest that one may fabricate the entire joint 10 from one single piece of material by cutting along the solid lines. While solving the problem of even attachment of the elastic sheet 16, this has also disadvantages. In particular, the cut surfaces between the sheet 16 and the upper and lower bent surfaces 22, 24 may not be smooth enough to allow for an evenly distributed pressure normal to the sheet 16, and facilitate the nucleation and propagation of cracks. In addition, the upper and lower parts 12, 14 of the joint 10 should be rigid, whereas the sheet 16 should be elastic. Cutting the parts 12, 14, 16 from the same material, this stiffness difference may be generated mostly by varying the relative thickness of the parts 12, 14, 16, which offers only a limited range of optimization. For ultra-small mechanisms 40 such as in micromechanics, however, this may be a way to go.

Fig. 12 shows a perspective view of the device 100, and Fig. 13 shows a side view of the device 100 of Fig. 12. The device 100 comprises a plurality of joints 10 forming a mechanism 40. The device 100 is configured to be moved in a vacuum.

The parallelogram mechanism 40 based on the joints 10 according to the invention is shown in Fig. 2. To stabilize the motion in the third dimension, the mechanism 40 extends uniformly in the dimension out of the drawing plane, preferentially by about the same amount as the vertical sizes. Figs. 12 and 13 show an example implementation of such a mechanism 40 in the device 100.

The device 100 comprises an actuation mechanism 102, with the actuation mechanism 102 being attached at the side 42 of the mechanism 40 held fixed to a further component 50. Specifically some of the supporting parts 12 of the joints 10 of the mechanism 40 are connected to the actuation mechanism 102.

The actuation mechanism 102 comprises a push rod 104. The push rod 104 in use pushes the mechanism 40 to the left and the right in the drawing of Fig. 13, i.e. in the direction to and fro extending between the side 42 and the side 46.

The side 46 of the mechanism 40 is connected to a support 106 for linking the device 100 to an applicator 108 (see Fig. 14). The support is attached to the mechanism 40 at the side 46 of the mechanism 40 arranged in parallel to the side 42 connected to the push rod 104. More specifically the other ones of the supporting parts 12 of the joints 10 of the mechanism 40 are connected to the support 106. The movement of the support 106 is hence affected via the respective mobile parts 14 of the mechanism 40.

The support 106 shown in Figs. 12 and 13 comprises a fork, other types of supports (not shown) can be formed by at least one of a bracket, a plate, a holder, a table and combinations of the foregoing.

Generally speaking the support 106 is configured to make contact to the applicator 108 in a direction perpendicular B to the direction A of movement, i.e. in a manner similar to a fork lift truck.

Fig. 14a to d show examples of different kinds of applicators 108. Fig. 14a shows a source holder 112 for a source 110. The support 106 is thus configured to move a source 110 from one position to another. Fig. 14b shows an applicator 108 in the form of an aperture 114, Fig. 14c shows an applicator 108 in the form of a beam dump 116, and Fig. 14d shows an applicator in the form of a deflector 118.

It should generally be noted that the guiding and connecting part 16 can have a thickness selected in the range of 0.02 µm to 5 cm, in particular 1 to 100 µm. It should further generally be noted that a thickness of the mobile part 14 can be selected in the range of 0.04 µm to 100 cm, in particular in the range of 0.5 to 2 mm. It should further generally be noted that a thickness of the supporting part 12 can be selected in the range of 0.04 µm to 100 cm, in particular in the range of 0.5 to 2 mm.

The mobile part 14 may comprise, i.e. be made of, a material selected from the group of members consisting of metal, such as stainless steel, steel, aluminium, aluminium alloys, non-ferrous alloys, high temperature alloys, carbon steels, high carbon steels, steel alloys, aluminium bronze, nickel, nickel alloys, brass, oxygen-free copper, titanium, niobium, molybdenum, tantalum, plastic, such as, polyether ether ketone (PEEK), polycarbonate (PO), polyoxymethylene (POM), polytetrafluoroethylene (PTFE), vespel polyimide, glass, wood, ceramic material, silicon and combinations of the foregoing.

The supporting part 12 may comprise, i.e. be made of, a material selected from the group of members consisting of metal, such as stainless steel, steel, aluminium, aluminium alloys, non-ferrous alloys, high temperature alloys, carbon steels, high carbon steels, steel alloys, aluminium bronze, nickel, nickel alloys, brass, oxygen-free copper, titanium, niobium, molybdenum, tantalum, plastic, such as, polyether ether ketone (PEEK), polycarbonate (PO), polyoxymethylene (POM), polytetrafluoroethylene (PTFE), vespel polyimide, glass, wood, ceramic material, silicon and combinations of the foregoing.

The guiding and connecting part 16 may comprise, i.e. be made of, a material selected from the group of members consisting of stainless steel, steel, aluminium, aluminium alloys, non-ferrous alloys, high temperature alloys, carbon steels, high carbon steels, steel alloys, aluminium bronze, nickel, nickel alloys, brass, oxygen-free copper, titanium, niobium, molybdenum, tantalum, polyether ether ketone (PEEK), polycarbonate (PO), polyoxymethylene (POM), polytetrafluoroethylene (PTFE), vespel polyimide, silicon and combinations of the foregoing.

The practical implementation of the mechanism 40 in a device 100 is shown in Figs. 12 and 13. This device 100 serves to manipulate source and sample plates in a thermal laser epitaxy system by vertically lifting and lowering its front part. Actuation is performed by the push rod 104 acting on a lever which is part of the upper arm (i.e. side 48) of the parallelogram mechanism 40. The push rod 104 is a state of the art device that is operated by magnetic coupling through the vacuum boundary. Due to the limited space available, the push rod 104 pushes directly on the lever. The lever does not move along a straight line within the range of motions, leading to gliding friction at this point in this particular device 100. Space allowing, this gliding friction, however, could be also be avoided by the rod 104 pulling on the lever from the other side instead of pushing, and using another elastic sheet in between to accommodate for the small vertical offset during the movement. This makes the entire mechanism gliding friction free, and free of mechanical play.

### List of reference numerals:

- 10: joint
- 12: supporting part
- 14: mobile part
- 16: guiding and connecting part
- 18: region of convex shape
- 20: region of convex shape
- 22: surface
- 24: surface
- 26: first end of 16
- 28: second end of 16
- 30: end of 12
- 32, 32': second border of 20, first border of 20
- 34: end of 14
- 36, 36': second border of 18, first border of 18

- 40: mechanism
- 42: first side
- 44: second side
- 46: third side
- 48: fourth side
- 50: further component
- 52: edge
- 54: edge
- 56: edge
- 58: edge

- 100: device
- 102: actuation mechanism
- 104: push rod
- 106: support
- 108: applicator
- 110: source
- 112: source holder
- 114: aperture
- 116: beam dump
- 118: deflector

- A: direction
- B: direction perpendicular to A
- P: plane containing axes

## Claims

1. A joint (10) for a device (100) moveable in vacuum, the joint (10) comprising a supporting part (12), a mobile part (14) and a guiding und connecting part (16), wherein the mobile part (14) and the supporting part (12) each have at least a region (18, 20) of convex shape (18, 20), with the regions (18, 20) of convex shape of the mobile part (14) and of the supporting part (12) facing one another and with the guiding and connecting part (16) being clamped between the regions (18, 20) of convex shape, wherein the guiding and connecting part (16) has a greater bending elasticity than either of the supporting part (12) and the mobile part (14) and the guiding and connecting part (16) has a reduced thickness in comparison to the supporting part (12) and the mobile part (14), and wherein the mobile part (14) can move relative to the supporting part (12).

2. A joint (10) in accordance with claim 1,
wherein the region (18, 20) of convex shape of at least one of the mobile part (14) and the supporting part (12) has an arcuate shape.

3. A joint (10) in accordance with claim 1 or claim 2,
wherein the respective region (18, 20) of convex shape of the mobile part (14) and of the supporting part (12) is formed by bending a respective first part of the region (18, 20) of convex shape relative to a second part of the region (18, 20) of convex shape, with the bend being selected in the range of 10 to 80°.

4. A joint (10) in accordance with any one of the preceding claims,
wherein the region (18, 20) of convex shape of the mobile part (14) and of the supporting part (12) is formed such that the mobile part (14) and the supporting part (12) each have a part cylindrical surface (22, 24) having an arcuate shape and forming a part cylindrical axis,
wherein in particular a plane (P) containing the part cylindrical axes of the surfaces of the mobile part (14) and the supporting part (12) contain contact lines of the mobile part (14) and the supporting part (12) with the guiding and connecting part (16).

5. A joint (10) in accordance with any one of the preceding claims,
wherein the guiding and connecting part (16) has a thickness selected in the range of 0.02 µm to 5 cm, in particular 1 to 100 µm; and/or
wherein the guiding and connecting part (16) has a bending elasticity which is at least twice the bending elasticity of the mobile part (14) and/or of the supporting part (12); and/or
wherein the guiding and connecting part (16), the mobile part (14) and the supporting part (12) are made from the same material.

6. A joint (10) in accordance with any one of the preceding claims,
wherein the guiding and connecting part (16), the mobile part (14) and the supporting part (12) are made in one piece.

7. A joint (10) in accordance with any one of the preceding claims 1 to 5, wherein the guiding and connecting part (16), the mobile part (14) and the supporting part (12) are separate components.

8. A joint (10) in accordance with any one of the preceding claims,
wherein the mobile part (14) can rotate relative to the supporting part (12), with a range of rotation being selected in the range of 20 to 160°; and/or
wherein the mobile part (14) comprises a material selected from the group of members consisting of metal, such as stainless steel, steel, aluminium, aluminium alloys, non-ferrous alloys, high temperature alloys, carbon steels, high carbon steels, steel alloys, aluminium bronze, nickel, nickel alloys, brass, oxygen-free copper, titanium, niobium, molybdenum, tantalum, plastic, such as, polyether ether ketone (PEEK), polycarbonate (PO), polyoxymethylene (POM), polytetrafluoroethylene (PTFE), vespel polyimide, glass, wood, ceramic material, silicon and combinations of the foregoing; and/or
wherein the supporting part (12) comprises a material selected from the group of members consisting of metal, such as stainless steel, steel, aluminium, aluminium alloys, non-ferrous alloys, high temperature alloys, carbon steels, high carbon steels, steel alloys, aluminium bronze, nickel, nickel alloys, brass, oxygen-free copper, titanium, niobium, molybdenum, tantalum, plastic, such as, polyether ether ketone (PEEK), polycarbonate (PO), polyoxymethylene (POM), polytetrafluoroethylene (PTFE), vespel polyimide, glass, wood, ceramic material, silicon and combinations of the foregoing; and/or
wherein the guiding and connecting part (16) comprises a material selected from the group of members consisting of stainless steel, steel, aluminium, aluminium alloys, non-ferrous alloys, high temperature alloys, carbon steels, high carbon steels, steel alloys, aluminium bronze, nickel, nickel alloys, brass, oxygen-free copper, titanium, niobium, molybdenum, tantalum, polyether ether ketone (PEEK), polycarbonate (PO), polyoxymethylene (POM), polytetrafluoroethylene (PTFE), vespel polyimide, silicon and combinations of the foregoing.

9. A joint (10) in accordance with any one of the preceding claims,
wherein a thickness of the mobile part (14) is selected in the range of 0.04 µm to 100 cm, in particular in the range of 0.5 to 2 mm; and/or
wherein a thickness of the supporting part (12) is selected in the range of 0.04 µm to 100 cm, in the range of 0.5 to 2 mm.

10. A joint (10) in accordance with any one of the preceding claims,
wherein the guiding and connecting part (16) is fastened to at least one of the mobile part (14) and the supporting part (12); and/or
wherein one or more ends of the guiding and connecting part (16) is fastened to at least one of the mobile part (14) and the supporting part (12), optionally wherein the guiding and connecting part (16) is fastened to at least one of the mobile part (14) and the supporting part (12) by at least one of spot welding, welding, soldering, brazing, screwing, bonding and riveting.

11. A mechanism (40) for moving a device (100) in vacuum, the mechanism (40) comprising a plurality of joints (10) in accordance with any one of the preceding claims.

12. A mechanism (40) in accordance with claim 20,
wherein the mechanism (40) comprises four joints (10); and/or
wherein the mechanism (40) is a parallelogram mechanism with one side (42) of the parallelogram mechanism (40) being held fixed to a further component (50) and the plurality of joints (10) being arranged at the edges (52, 54, 56, 58) of the parallelogram mechanism (40), in particular wherein the parallelogram mechanism (40) is configured to be moved to and fro in one direction (A) relative to the one side (42) of the parallelogram mechanism (40) held fixed to the further component (50).

13. A device (100) comprising a plurality of joints (10) in accordance with one of claims 1 to 10 and/or a mechanism (40) in accordance with one of claims 11 to 12, the device (100) being configured to be moved in a vacuum.

14. A device (100) in accordance with claim 13,
further comprising an actuation mechanism (102), with the actuation mechanism (102) being attached at the side of the mechanism (40) held fixed to a further component (50), in particular wherein the actuation mechanism (102) comprises a push rod (104).

15. A device (100) in accordance with claim 13 or claim 14,
further comprising a support (106) for linking the device (100) to an applicator (108) attached to a further side (46) of the mechanism (40) of the device (100) remote from the side (42) held fixed to a further component (50); and/or
wherein the support (106) comprises at least one of a bracket, a fork, a plate, a holder, a table and a combination of the foregoing; and/or
wherein the support (106) is configured to make contact to the applicator (108) in a direction perpendicular (B) to the direction (A) of movement; and/or
wherein the applicator (108) comprises one of a source holder (112) for a source (110), an aperture (114), a source (110), a beam dump (116), a deflector (118) and combinations of the foregoing.

## Patentansprüche

1. Gelenk (10) für eine im Vakuum bewegliche Vorrichtung (100), wobei das Gelenk (10) ein Trägerteil (12), ein bewegliches Teil (14) und ein Führungsund Verbindungsteil (16) umfasst, wobei das bewegliche Teil (14) und das Trägerteil (12) jeweils mindestens einen Bereich (18, 20) mit konvexer Form (18, 20) aufweisen, wobei die Bereiche (18, 20) mit konvexer Form des beweglichen Teils (14) und des Trägerteils (12) einander zugewandt sind und wobei das Führungs- und Verbindungsteil (16) zwischen den Bereichen (18, 20) mit konvexer Form eingeklemmt ist, wobei das Führungs- und Verbindungsteil (16) eine größere Biegeelastizität aufweist als das Trägerteil (12) und das bewegliche Teil (14) und das Führungs- und Verbindungsteil (16) eine geringere Dicke im Vergleich zu dem Trägerteil (12) und dem beweglichen Teil (14) aufweist, und wobei das bewegliche Teil (14) sich relativ zu dem Trägerteil (12) bewegen kann.

2. Gelenk (10) nach Anspruch 1,
wobei der Bereich (18, 20) mit konvexer Form des beweglichen Teils (14) und/oder des Trägerteils (12) eine gekrümmte Form aufweist.

3. Gelenk (10) nach Anspruch 1 oder Anspruch 2,
wobei der jeweilige Bereich (18, 20) mit konvexer Form des beweglichen Teils (14) und des Trägerteils (12) durch Biegen eines jeweiligen ersten Teils des Bereichs (18, 20) mit konvexer Form relativ zu einem zweiten Teil des Bereichs (18, 20) mit konvexer Form gebildet ist, wobei die Biegung im Bereich von 10 bis 80° gewählt ist.

4. Gelenk (10) nach einem der vorhergehenden Ansprüche,
wobei der Bereich (18, 20) mit konvexer Form des beweglichen Teils (14) und des Trägerteils (12) derart ausgebildet ist, dass das bewegliche Teil (14) und das Trägerteil (12) jeweils eine Teilzylinderfläche (22, 24) aufweisen, die eine gekrümmte Form aufweist und eine Teilzylinderachse bildet, wobei insbesondere eine Ebene (P), die die Teilzylinderachsen der Oberflächen des beweglichen Teils (14) und des Trägerteils (12) enthält, Berührungslinien des beweglichen Teils (14) und des Trägerteils (12) mit dem Führungs- und Verbindungsteil (16) enthält.

5. Gelenk (10) nach einem der vorhergehenden Ansprüche,
wobei das Führungs- und Verbindungsteil (16) eine Dicke aufweist, die im Bereich von 0,02 µm bis 5 cm, insbesondere 1 bis 100 µm, gewählt ist; und/oder
wobei das Führungs- und Verbindungsteil (16) eine Biegeelastizität aufweist, die mindestens das Doppelte der Biegeelastizität des beweglichen Teils (14) und/oder des Trägerteils (12) beträgt; und/oder
wobei das Führungs- und Verbindungsteil (16), das bewegliche Teil (14) und das Trägerteil (12) aus demselben Material hergestellt sind.

6. Gelenk (10) nach einem der vorhergehenden Ansprüche,
wobei das Führungs- und Verbindungsteil (16), das bewegliche Teil (14) und das Trägerteil (12) aus einem Stück gefertigt sind.

7. Gelenk (10) nach einem der vorhergehenden Ansprüche 1 bis 5,
wobei das Führungs- und Verbindungsteil (16), das bewegliche Teil (14) und das Trägerteil (12) separate Komponenten sind.

8. Gelenk (10) nach einem der vorhergehenden Ansprüche,
wobei das bewegliche Teil (14) relativ zum Trägerteil (12) rotieren kann, wobei ein Drehbereich im Bereich von 20 bis 160° gewählt ist; und/oder
wobei das bewegliche Teil (14) ein Material umfasst, das aus der Gruppe von Elementen ausgewählt ist, die aus Metall, wie etwa rostfreiem Stahl, Stahl, Aluminium, Aluminiumlegierungen, Nichteisenlegierungen, Hochtemperaturlegierungen, Kohlenstoffstählen, kohlenstoffreichen Stählen, Stahllegierungen, Aluminiumbronze, Nickel, Nickellegierungen, Messing, sauerstofffreies Kupfer, Titan, Niob, Molybdän, Tantal, Kunststoffen wie etwa Polyetheretherketon (PEEK), Polycarbonat (PO), Polyoxymethylen (POM), Polytetrafluorethylen (PTFE), Vespelpolyimid, Glas, Holz, Keramikmaterial, Silizium und Kombinationen der vorgenannten besteht; und/oder
wobei das Trägerteil (12) ein Material umfasst, das aus der Gruppe von Elementen ausgewählt ist, die aus Metall, wie etwa rostfreiem Stahl, Stahl, Aluminium, Aluminiumlegierungen, Nichteisenlegierungen, Hochtemperaturlegierungen, Kohlenstoffstählen, kohlenstoffreichen Stählen, Stahllegierungen, Aluminiumbronze, Nickel, Nickellegierungen, Messing, sauerstofffreies Kupfer, Titan, Niob, Molybdän, Tantal, Kunststoffen wie etwa Polyetheretherketon (PEEK), Polycarbonat (PO), Polyoxymethylen (POM), Polytetrafluorethylen (PTFE), Vespel-Polyimid, Glas, Holz, Keramikmaterial, Silizium und Kombinationen der vorgenannten besteht; und/oder
wobei das Führungs- und Verbindungsteil (16) ein Material umfasst, das aus der Gruppe von Elementen ausgewählt ist, die aus Edelstahl, Stahl, Aluminium, Aluminiumlegierungen, Nichteisenlegierungen, Hochtemperaturlegierungen, Kohlenstoffstählen, kohlenstoffreichen Stählen, Stahllegierungen Aluminiumbronze, Nickel, Nickellegierungen, Messing, sauerstofffreies Kupfer, Titan, Niob, Molybdän, Tantal, Polyetheretherketon (PEEK), Polycarbonat (PO), Polyoxymethylen (POM), Polytetrafluorethylen (PTFE), Vespelpolyimid, Silizium und Kombinationen der vorgenannten Materialien besteht.

9. Gelenk (10) nach einem der vorhergehenden Ansprüche,
wobei eine Dicke des beweglichen Teils (14) im Bereich von 0,04 µm bis 100 cm, insbesondere im Bereich von 0,5 bis 2 mm, gewählt ist; und/oder
wobei eine Dicke des Trägerteils (12) im Bereich von 0,04 µm bis 100 cm, im Bereich von 0,5 bis 2 mm, gewählt ist.

10. Gelenk (10) nach einem der vorhergehenden Ansprüche,
wobei das Führungs- und Verbindungsteil (16) an mindestens einem von dem beweglichen Teil (14) und dem Trägerteil (12) befestigt ist; und/oder wobei ein oder mehrere Enden des Führungs- und Verbindungsteils (16) an mindestens einem von dem beweglichen Teil (14) und dem Trägerteil (12) befestigt sind, optional
wobei das Führungs- und Verbindungsteil (16) an mindestens einem von dem beweglichen Teil (14) und dem Trägerteil (12) durch zumindest eines von Punktschweißen, Schweißen, Löten, Hartlöten, Verschrauben, Kleben und Nieten befestigt ist.

11. Mechanismus (40) zum Bewegen einer Vorrichtung (100) im Vakuum, wobei der Mechanismus (40) eine Vielzahl von Gelenken (10) nach einem der vorhergehenden Ansprüche umfasst.

12. Mechanismus (40) nach Anspruch 20,
wobei der Mechanismus (40) vier Gelenke (10) umfasst; und/oder
wobei der Mechanismus (40) ein Parallelogramm-Mechanismus ist, wobei eine Seite (42) des Parallelogramm-Mechanismus (40) an einem weiteren Bauteil (50) fixiert gehalten ist und die Vielzahl von Gelenken (10) an den Kanten (52, 54, 56, 58) des Parallelogramm-Mechanismus (40) angeordnet sind, wobei insbesondere der Parallelogramm-Mechanismus (40) dazu ausgebildet ist, relativ zu der an dem weiteren Bauteil (50) fixierten einen Seite (42) des Parallelogramm-Mechanismus (40) in einer Richtung (A) hin und her bewegt zu werden.

13. Vorrichtung (100) mit einer Vielzahl von Gelenken (10) nach einem der Ansprüche 1 bis 10 und/oder einem Mechanismus (40) nach einem der Ansprüche 11 bis 12, wobei die Vorrichtung (100) zum Bewegen in einem Vakuum ausgebildet ist.

14. Vorrichtung (100) nach Anspruch 13,
die ferner einen Betätigungsmechanismus (102) umfasst, wobei der Betätigungsmechanismus (102) an der Seite des fest an einem weiteren Bauteil (50) gehaltenen Mechanismus (40) angebracht ist, insbesondere wobei der Betätigungsmechanismus (102) eine Schubstange (104) umfasst.

15. Vorrichtung (100) nach Anspruch 13 oder Anspruch 14,
die ferner einen Träger (106) zur Verbindung der Vorrichtung (100) mit einem Applikator (108) umfasst, der an einer weiteren Seite (46) des Mechanismus (40) der Vorrichtung (100) angebracht ist, die von der Seite (42) entfernt ist, die an einem weiteren Bauteil (50) fixiert gehalten ist, und/oder wobei der Träger (106) mindestens eine Klammer, eine Gabel, eine Platte, einen Halter, einen Tisch oder eine Kombination der vorgenannten umfasst, und/oder
wobei der Träger (106) so konfiguriert ist, dass er mit dem Applikator (108) in einer Richtung senkrecht (B) zur Bewegungsrichtung (A) in Kontakt kommt; und/oder
wobei der Applikator (108) einen von einem Quellenhalter (112) für eine Quelle (110), einer Öffnung (114), einer Quelle (110), einem Strahlenkanal (116), einem Deflektor (118) und Kombinationen der vorgenannten umfasst.

## Revendications

1. Jointure (10) pour un dispositif (100) déplaçable sous vide, la jointure (10) comprenant une partie de support (12), une partie mobile (14) et une partie de guidage et de connexion (16), dans laquelle la partie mobile (14) et la partie de support (12) ont chacune au moins une région (18, 20) de forme convexe (18, 20), les régions (18, 20) de forme convexe de la partie mobile (14) et de la partie de support (12) se faisant face l'une à l'autre et la partie de guidage et de connexion (16) étant serrée entre les régions (18, 20) de forme convexe, dans laquelle la partie de guidage et de connexion (16) a une élasticité de flexion supérieure à celle de l'une et l'autre de la partie de support (12) et de la partie mobile (14), et la partie de guidage et de connexion (16) a une épaisseur réduite par comparaison à celle de la partie de support (12) et de la partie mobile (14), et dans laquelle la partie mobile (14) peut se déplacer relativement à la partie de support (12).

2. Jointure (10) selon la revendication 1,
dans laquelle la région (18, 20) de forme convexe de l'une au moins de la partie mobile (14) et de la partie de support (12) a une forme arquée.

3. Jointure (10) selon la revendication 1 ou 2,
dans laquelle la région respective (18, 20) de forme convexe de la partie mobile (14) de la partie de support (12) est formée en fléchissant une première partie respective de la région (18, 20) de forme convexe relativement à une seconde partie de la région (18, 20) de forme convexe, la flexion étant sélectionnée dans la plage de 10 à 80°.

4. Jointure (10) selon l'une quelconque des revendications précédentes,
dans laquelle la région (18, 20) de forme convexe de la partie mobile (14) et de la partie de support (12) est formée de telle sorte que la partie mobile (14) et la partie de support (12) ont chacune une surface cylindrique partielle (22, 24) ayant une forme arquée et formant un axe cylindrique partiel,
dans laquelle en particulier un plan (P) contenant les axes cylindriques partiels des surfaces de la partie mobile (14) et de la partie de support (12) contient des lignes de contact de la partie mobile (14) et de la partie de support (12) avec la partie de guidage et de connexion (16).

5. Jointure (10) selon l'une quelconque des revendications précédentes,
dans laquelle la partie de guidage et de connexion (16) a une épaisseur sélectionnée dans la plage de 0,02 µm à 5 cm, en particulier de 1 à 100 µm ; et/ou
dans laquelle la partie de guidage et de connexion (16) a une élasticité de flexion qui est au moins deux fois l'élasticité de flexion de la partie mobile (14) et/ou de la partie de support (12) ; et/ou
dans laquelle la partie de guidage et de connexion (16), la partie mobile (14) et la partie de support (12) sont faites à partir du même matériau.

6. Jointure (10) selon l'une quelconque des revendications précédentes, dans laquelle la partie de guidage et de connexion (16), la partie mobile (14) et la partie de support (12) sont faites d'une seule pièce.

7. Jointure (10) selon l'une quelconque des revendications précédentes 1 à 5,
dans laquelle la partie de guidage et de connexion (16), la partie mobile (14) et la partie de support (12) sont des composants séparés.

8. Jointure (10) selon l'une quelconque des revendications précédentes, dans laquelle la partie mobile (14) peut se mettre en rotation relativement à la partie de support (12), une plage de rotation étant sélectionnée dans la plage de 20 à 160° ; et/ou
dans laquelle la partie mobile (14) comprend un matériau sélectionné parmi le groupe d'éléments constitué de : métal, par exemple acier inoxydable, acier, aluminium, alliages d'aluminium, alliages non-ferreux, alliages haute température, acier au carbone, acier à haute teneur en carbone, alliages d'acier, bronze d'aluminium, nickel, alliages de nickel, laiton, cuivre exempt d'oxygène, titane, niobium, molybdène, tantale ; plastiques, par exemple polyétheréthercétone (PEEK), polycarbonate (PO), polyoxyméthylène (POM), polytétrafluoroéthylène (PTFE), polyimide Vespel ; verre ; laine ; matériau céramique ; silicone ; et des combinaisons de ceux-ci ; et/ou
dans laquelle la partie de support (12) comprend un matériau sélectionné parmi le groupe d'éléments constitué de : métal, par exemple acier inoxydable, acier, aluminium, alliages d'aluminium, alliages non-ferreux, alliages haute température, acier au carbone, acier à haute teneur en carbone, alliages d'acier, bronze d'aluminium, nickel, alliages de nickel, laiton, cuivre exempt d'oxygène, titane, niobium, molybdène, tantale ; plastiques, par exemple polyétheréthercétone (PEEK), polycarbonate (PO), polyoxyméthylène (POM), polytétrafluoroéthylène (PTFE), polyimide Vespel ; verre ; laine ; matériau céramique ; silicone ; et des combinaisons de ceux-ci ; et/ou
dans laquelle la partie de guidage et de connexion (16) comprend un matériau sélectionné parmi le groupe d'éléments constitué de : métal, par exemple acier inoxydable, acier, aluminium, alliages d'aluminium, alliages non-ferreux, alliages haute température, acier au carbone, acier à haute teneur en carbone, alliages d'acier, bronze d'aluminium, nickel, alliages de nickel, laiton, cuivre exempt d'oxygène, titane, niobium, molybdène, tantale ; plastiques, par exemple polyétheréthercétone (PEEK), polycarbonate (PO), polyoxyméthylène (POM), polytétrafluoroéthylène (PTFE), polyimide Vespel ; verre ; laine ; matériau céramique ; silicone ; et de combinaisons de ceux-ci.

9. Jointure (10) selon l'une quelconque des revendications précédentes,
dans laquelle une épaisseur de la partie mobile (14) est sélectionnée dans la plage de 0,04 µm à 100 cm, en particulier dans la plage de 0,5 à 2 mm ; et/ou
dans laquelle une épaisseur de la partie de support (12) est sélectionnée dans la plage de 0,04 µm à 100 cm, dans la plage de 0,5 à 2 mm.

10. Jointure (10) selon l'une quelconque des revendications précédentes,
dans laquelle la partie de guidage et de connexion (16) est attachée à l'une au moins de la partie mobile (14) et de la partie de support (12) ; et/ou
dans laquelle une ou plusieurs extrémités de la partie de guidage et de connexion (16) sont attachées à l'une au moins de la partie mobile (14) et de la partie de support (12), en option
dans laquelle la partie de guidage et de connexion (16) est attachée à l'une au moins de la partie mobile (14) et de la partie de support (12) par l'un au moins d'un soudage par points, d'un soudage, d'un brasage, d'un vissage, d'une liaison et d'un rivetage.

11. Mécanisme (40) destiné à déplacer un dispositif (100) sous vide, le mécanisme (40) comprenant une pluralité de jointures (10) selon l'une des revendications précédentes.

12. Mécanisme (40) selon la revendication 20,
dans lequel le mécanisme (40) comprend quatre jointures (10) ; et/ou
dans lequel le mécanisme (40) est un mécanisme à parallélogramme, un côté (42) du mécanisme à parallélogramme (40) étant maintenu de manière fixe sur un composant supplémentaire (50) et la pluralité de jointures (10) étant agencées au niveau des bords (52, 54, 56, 58) du mécanisme à parallélogramme (40), en particulier dans lequel le mécanisme à parallélogramme (40) est configuré pour être déplacé en va-et-vient dans une direction (A) relativement audit un côté (42) du mécanisme à parallélogramme (40) maintenu de manière fixe sur le composant supplémentaire (50).

13. Dispositif (100) comprenant une pluralité de jointures (10) selon l'une des revendications 1 à 10 et/ou un mécanisme (40) selon l'une des revendications 11 à 12, le dispositif (100) étant configuré pour être déplacé sous vide.

14. Dispositif (100) selon la revendication 13,
comprenant en outre un mécanisme d'actionnement (102), le mécanisme d'actionnement (102) étant attaché au niveau du côté du mécanisme (40) maintenu de manière fixe à un composant supplémentaire (50), en particulier dans lequel le mécanisme d'actionnement (102) comprend une tige de poussée (104).

15. Dispositif (100) selon la revendication 13 ou 14,
comprenant en outre un support (106) pour relier le dispositif (100) à un applicateur (108) attaché à un côté supplémentaire (46) du mécanisme (40 du dispositif (100) éloigné du côté (42) maintenu de manière fixe sur un composant supplémentaire (50) ; et/ou
dans lequel le support (106) comprend l'un au moins d'une monture, d'une fourche, d'une plaque, d'un porteur, d'une table, et d'une combinaison de ceux-ci ; et/ou
dans lequel le support (106) est configuré pour venir en contact avec l'applicateur (108) dans une direction perpendiculaire (B) à la direction (A) de déplacement ; et/ou
dans lequel l'applicateur (108) comprend un élément parmi un porteur de source (112) pour une source (110), une ouverture (114), une source (110), un amortisseur de faisceau (116), un déflecteur (118), et des combinaisons de ceux-ci.
